# EUROPÄISCHE PATENTSCHRIFT

(11) **EP 1 877 686 B1**
(45) Veröffentlichungstag und Bekanntmachung des Hinweises auf die Patenterteilung: **22.07.2015**
(21) Anmeldenummer: 06723391.6
(22) Anmeldetag: 14.03.2006
(51) Int. Cl.: F16J 9/22

(54) **KOLBEN FÜR EINE HUBKOLBENBRENNKRAFTMASCHINE MIT GEHÄRTETEN KOLBENRINGNUTEN**
PISTON FOR A RECIPROCATING-PISTON INTERNAL COMBUSTION ENGINE PROVIDED WITH HARDENED PISTON RING GROOVES
PISTON POUR MOTEUR A COMBUSTION INTERNE A PISTON ALTERNATIF PRESENTANT DES GORGES DE SEGMENT DE PISTON TREMPEES

(30) Priorität: 18.03.2005 DE 102005013087
(43) Veröffentlichungstag der Anmeldung: 16.01.2008
(73) Patentinhaber: MAN Diesel & Turbo SE, 86153 Augsburg (DE)
(72) Erfinder: LÜPFERT, Anja, 86447 Aindling-Hausen (DE); KNOBLOCH, Stefan, 86154 Augsburg (DE)
(86) Internationale Anmeldenummer: PCT/EP2006/002293
(87) Internationale Veröffentlichungsnummer: WO 2006/097265

(56) Entgegenhaltungen:
- DE-A- 10 221 800
- DE-C1- 19 833 825
- US-A1- 2003 150 419

## Beschreibung

Die Erfindung betrifft einen Kolben für eine Hubkolbenbrennkraftmaschine aus einer nitridbildenden Basislegierung mit einem Kolbenoberteil, der mit mehreren umlaufenden Kolbenringnuten und einem Feuersteg ausgeführt ist und mind. dessen oberste brennraumnahe Ringnut gegen Verschleiß geschützte, gehärtete Nutflanken aufweist.

Das Kolbenoberteils, das das oberste, dem Verbrennungsraum gegenüberliegende Element darstellt und den gesamten Verbrennungsablauf durchläuft, bildet das am meisten gefährdete Teil eines gattungsbildenden Kolbens.

Eine besondere Rolle spielt hier die Abdichtung gegen den von oben auf das Kölbenoberteil einwirkenden Verbrennungsdruck. Dies geschieht durch sog. Kolbenringe, die im seitlichen Teil des Kolbens in Kolbenringnuten sitzen und den Brennraum nach unten gegen das Kurbelgehäuse abdichten. Ein großes Problem in diesem Bereich ist die Lebensdauer der Kolbenringnuten. Diese bestimmt sehr stark die Wartungsintervalle und damit Betriebskosten und Betriebssicherheit des gesamten Kolbens.

Bekanntlich werden zur Verlängerung der Betriebslebensdauer solche Kolbenoberteile und insbesondere deren Kolbenringnuten gehärtet, und zwar entweder induktiv und/oder durch Verchromen. Die induktive Härtung ergibt ein mittleres Verschleißverhalten. Z. B. zeigt bereits die DE 198 33 825 C1 einen oben beschriebenen Kolben, insbesondere für einen Großmotor, bei dem die Kolbenringnuten gegen Verschleiß geschützte Flanken aufweisen.

Das Kolbenoberteil besteht hier aus vergütetem und legiertem Stahl, der im Bereich der oberen und unteren Flanken der Kolbenringnuten so gehärtet ist, dass sich über den tragenden Bereich der Flankenbreite durchgehende Härtungszonen ergeben. Der Härtungsvorgang kann zweckmäßig auf induktivem Wege erfolgen, was die erforderliche Temperaturführung zur Bewerkstelligung der gewünschten Gefügeumsetzung auf einfache Weise ermöglicht.

Diese Maßnahme reicht jedoch ab einer bestimmten Höhe des Zünddrucks nicht mehr aus. Die Flankenbelastung nimmt nämlich mit steigendem Zünddruck überproportional zu. Ungünstig sind in diesem Zusammenhang auch die heute erwünschten niedrigen Schmierraten. Es kommt daher zu einem schnellen Verschleiß der gehärteten Flanken. Dies gilt insbesondere für die erste, dem Brennraum am nächsten liegenden Kolbenringnut, wo erfahrungsgemäß die Belastung am größten ist.

Bekannt ist andererseits auch bereits, dass bei nitrierten oder nitrocarburierten Stählen der Verschleißwiderstand deutlich erhöht ist.

Allgemein versteht man unter Plasmanitrieren oder Plasmanitrocarburieren ein Härten der Oberflächenschichten von Stählen, wobei Stickstoff- bzw. Kohlenstoffatome eindiffundieren und dabei in einer dünnen Oberflächenschicht mit Eisen zu Nitriden bzw. Carbonitriden reagieren, der Verbindungsschicht. In der sich daran anschließenden Diffusionsschicht wird der Stickstoff erst beim Abkühlen teilweise als Nitrid ausgeschieden und bewirkt dann die Härtesteigerung. Die Härte selbst hängt von der Art der Nitride ab. Je nachdem, wie der Stickstoff mit dem Stahl zur Reaktion gebracht wird, unterscheiden sich Nitrierzeit und -schicht.

Mit anderen Worten, es erfolgt eine Diffusionssättigung der Randschicht eines Werkstoffes mit Stickstoff, um Härte, Verschleißwiderstand, Dauerfestigkeit und Korrosionsbeständigkeit zu erhöhen. Die Randschicht besteht nach dem Nitrieren / Nitrocarburieren aus einer äußeren Nitridschicht bzw. Carbonitridschicht (Verbindungsschicht) und einer anschließenden Schicht aus Stickstoff angereichterten Mischkristallen und ausgeschiedenen Nitriden (Diffusionsschicht).

Durch Ionisation des Stickstoffs durch Glimmentladung, dem sog. Plasmanitrieren, können die Nitrierzeiten verkürzt werden (Plasmanitrieren bei 450°C bis 550°C).

Beim Nitrocarburieren, bei dem das Behandlungsmittel außer Stickstoff auch Kohlenstoff abgebende Bestandteile enthält, kann in Pulver, Salzbad, Gas oder Plasma eben nitrocarburiert werden (Plasmanitrocarburieren bei 500°C bis 590°C, bevorzugt bei ca. 520°C).

Der Erfindung liegt daher die Aufgabe zugrunde, einen gattungsgemäßen Kolben mit bereits mittels einer Randschicht gehärteten Ringnutflanken und aus einem vergüteten und nitridbildenden legierten Stahl dahingehend zu optimieren, dass das Kolbenoberteil, insbesondere aber dessen oberste Kolbenringnuten eine weiterhin verlängerte Betriebslebensdauer aufweisen, d.h. dass insbesondere der Ringnutverschleiß am Kolbenoberteil weiter verringert ist.

Dadurch, dass zumindest die Außenflächen des Kolbenoberteils, die die gegen Verschleiß gehärteten Nutflanken umfassen, mit einer weiteren Verschleiß- und Korrosionsschutzschicht in Form einer Nitrierschicht versehen sind, wobei die Verschleiß- und Korrosionsschutzschicht durch Umsetzung der nitridbildenden Basislegierung durch Plasmanitrieren oder Plasmanitrocarburieren in einer Stickstoff- bzw. Stickstoff Kohlenstoff-Atmosphäre erzeugt ist, so dass die gehärteten Nutflanken zusätzlich mittels einer Nitrierschicht geschützt sind, wird ein deutlich verbesserter Verschleiß- und Korrosionsschutz und natürlich längere Wartungsintervalle / Bauteillebensdauer erreicht. Insbesondere in der am stärksten beanspruchten ersten Ringnut, die dem Verbrennungsraum am nächsten liegt, kann deren Verschleiß hierdurch stark minimiert werden.

Der erfindungsgemäße Kolben ist anhand eines Ausführungsbeispiels in der Zeichnung dargestellt und wird im weiteren näher erläutert.

Es zeigen:
- Figur 1: einen Längsschnitt durch ein erfindungsgemäß ausgebildetes Kolbenoberteil und
- Figur 2: eine Detailansicht aus der Figur 1 hinsichtlich der erfindungsgemäß an den Flanken gehärteten und zusätzlich mit einer Nitrierschicht versehenen drei oberen Ringnuten.

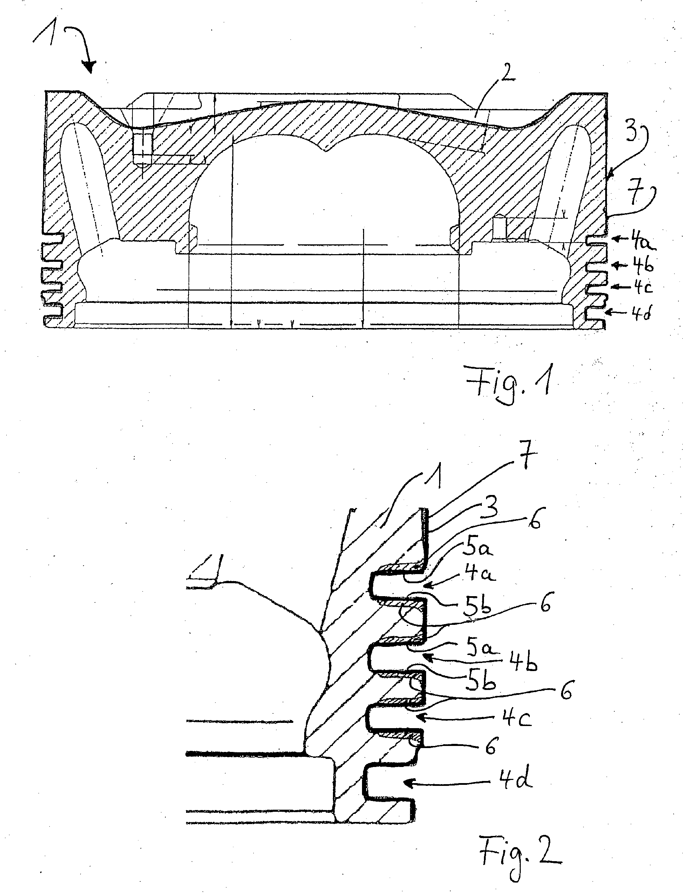

Figur 1 zeigt ein Kolbenoberteil (1) eines Kolbens einer Hubkolbenbrennkraftmaschine mit einer Brennraummulde (2), einem Feuersteg (3) und vier Ringnuten (4a,b,c,d) mit jeweils parallelen Ringnutflanken (5a,b).

Dieses Kolbenoberteil (1) besteht aus einem vergüteten und nitridbildenden legierten Stahl. Gemäß der Figur 2 sind die drei oberen Ringnuten (4a,b,c) jeweils im Bereich ihrer oberen und unteren Flanken (5a,b) so gehärtet, dass sich jeweils über den tragenden Bereich der Flankenbreite durchgehende Härtungszonen in Form einer Randschicht (6) ergeben. Der Härtevorgang selbst ist hier in bekannter Weise induktiv vorgenommen worden.

Desweiteren ist gemäß der Figur 1 und der Figur 2 vorgesehen, dass zumindest die Außenteile des Kolbenoberteils (1), die die gegen Verschleiß geschützten Ringnuten (4a,b,c) und den Feuersteg (3) umfassen, mit einer weiteren Verschleiß- und Korrosionsschutzschicht (7) in Form einer Nitrierschicht versehen sind, wobei die Verschleiß- und Korrosionsschutzschicht (7) durch Umsetzung der nitridbildenden Basislegierung durch Plasmanitrieren oder Plasmanitrocarburieren in einer Stickstoff- bzw. Stickstoff-Kohlenstoff-Atmosphäre erzeugt ist, so dass die gehärteten Nutflanken (5a,b) zusätzlich mittels einer Nitrierschicht (7) geschützt sind.

Dabei ist im Sinne der vorliegenden Erfindung wichtig, dass eben zumindest die mittels der Randschicht (6) gegen Verschleiß geschützten Ringnuten (4a, b, c) mitt einer weiteren Nitrierschicht versehen sind, Brennraummulde (2) und/oder Feuersteg (3) müssen nicht nitriert sein.

Insbesondere gemäß der Figur 1 ist nach dem vorliegenden Ausführungsbeispiel die komplette Außenfläche des Kolbenoberteils (1) mit der Nitrierschicht (7) versehen, während die Innenfläche des Kolbenoberteils (1) unbeschichtet bleibt.

Die Nitrierschicht (7) bildet bekanntlich einen zweischichtigen Aufbau aus, nämlich zumindest an der Bauteiloberfläche angrenzend eine Diffusionsschicht und eine darauf aufgebaute Verbindungsschicht. Es ist als für die vorliegende Erfindung charakterisierend herauszustellen, dass die Nitrierschicht (7) inklusive der gehärteten Randschicht eine Dicke (Nitrierhärtetiefe) von 0,2 mm bis 1,0 mm an den gehärteten Nutflanken (5a,b), die eine darauf aufgebaute Verbindungsschicht mit einer Dicke von 2 *µ*m bis 15 *µ*m aufweist, hat und eine Oberflächenhärte größer als 550 HV (Vickers) bietet.

Die Härte der Diffusionszone nimmt mit zunehmender Dicke bzw. Entfernung von der Oberfläche ab, da die Wirkung der Nitrierhärtung aufgrund der diese steuernden Diffusionsvorgänge mit der Tiefe abnimmt.

Die erfindungsgemäße Verwendung einer Nitrierschicht (7) für die mit Abgas beaufschlagte Außenoberfläche eines Kolbenoberteils (1) eines Kolbens einer Hubkolbenbrennkraftmaschine führt nicht nur zu einer erhöhten Verschleißfestigkeit im Ringnutenbereich, insbesondere der oberen Ringnuten und ganz besonders der ersten, den Brennraum (2) am nächsten liegenden Ringnut (4a), sondern bewirkt auch einen höheren Widerstand gegen Korrosion.

Es sei abschließend noch erwähnt, dass in bevorzugter Weise die gegen Verschleiß geschützten Nutflanken im ersten Durchgang induktiv gehärtet sind.

## Patentansprüche

1. Kolben für eine Hubkolbenbrennkraftmaschine aus einer nitridbildenden Basislegierung mit einem Kolbenoberteil (1), der mehrere umlaufende Kolbenringnuten (4) aufweist, und mind. dessen oberste brennraumnahe Ringnut (4a) mittels einer Randschicht (6) gegen Verschleiß geschützte, gehärtete Nutflanken (5a,b) aufweist, **dadurch gekennzeichnet, dass** zumindest die Außenflächen des Kolbenoberteils (1), die die gegen Verschleiß geschützten Ringnuten (4a,b,c) umfassen, mit einer weiteren Verschleiß- und Korrosionsschutzschicht (7) in Form einer Nitrierschicht versehen sind, wobei die Verschleiß- und Korrosionsschutzschicht (7) durch Umsetzung der nitridbildenden Basislegierung durch Plasmanitrieren oder Plasmanitrocarburieren in einer Stickstoff- bzw. Stickstoff-Kohlenstoff-Atmosphäre erzeugt ist, so dass die gehärteten Nutflanken (5a,b) zusätzlich mittels einer Nitrierschicht (7) geschützt sind.

2. Kolben nach Anspruch 1, **dadurch gekennzeichnet, dass** die komplette Außenfläche des Kolbenoberteils (1) mit der Nitrierschicht (7) versehen ist, während die Innenfläche des Kolbenoberteils (1) unbeschichtet bleibt.

3. Kolben nach Anspruch 1 oder 2, **dadurch gekennzeichnet, dass** die Nitrierschicht (7) inklusive der gehärteten Randschicht (6) eine Dicke (Nitrierhärtetiefe) von 0,2 mm bis 1,0 mm an den gehärteten Nutflanken (5a,b), die eine darauf aufgebaute Verbindungsschicht mit einer Dicke von 2 *µ*m bis 15 *µ*m aufweist, hat und eine Oberflächenhärte größer als 550 HV (Vickers) bietet.

4. Kolben nach Anspruch 1, **dadurch gekennzeichnet, dass** vor dem Auftrag der Nitrierschicht (7) die gegen Verschleiß geschützten Nutflanken (5a,b) induktiv gehärtet sind.

## Claims

1. A piston for a reciprocating piston type internal combustion engine of a nitride-forming base alloy with a piston upper part (1), comprising multiple circumferential piston ring grooves (4), and at least its uppermost ring groove (4a) near the combustion chamber comprises hardened groove flanks (5a, b) protected against wear by means of a surface layer (6), **characterized in that** at least the outer surfaces of the piston upper part (1), which comprise the ring grooves (4a, b, c) that are protected against wear, are provided with a further wear and corrosion protection layer (7) in the form of a nitration layer, wherein the wear and corrosion protection layer (7) through converting the nitride-forming base alloy is created through plasma nitriding or plasma nitrocarburizing in a nitrogen or nitrogen-carbon atmosphere, so that the hardened groove flanks (5a, b) are additionally protected by means of a nitration layer (7).

2. The piston according to Claim 1, **characterized in that** the complete outer surface of the piston upper part (1) is provided with the nitration layer (7), while the inner surface of the piston upper part (1) remains without layer.

3. The piston according to Claim 1 or 2, **characterized in that** the nitration layer (7) including the hardened surface layer (6) has a thickness (nitriding hardness depth) of 0.2 mm to 1.0 mm on the hardened groove flanks (5a, b), which comprises a connecting layer with a thickness of 2 µm to 15 µm built up thereon, and offers a surface hardness that is greater than 550 HV (Vickers).

4. The piston according to Claim 1, **characterized in that** prior to applying the nitration layer (7) the groove flanks (5a, b) protected against wear are inductively hardened.

## Revendications

1. Piston pour un moteur alternatif à combustion interne constitué d'une alliage de base formant un nitrure avec une partie supérieure de piston (1), qui présente plusieurs rainures annulaires de piston (4) circonférentielles et dont au moins une rainure annulaire la plus haute (4a) proche de la chambre de combustion présente des flancs de rainure (5a,b) durcis, protégés au moyen d'une couche de bordure (6) contre l'usure, en ce que au moins les surfaces extérieures de la partie supérieure de piston (1), qui comprennent des rainures annulaires (4a,b,c) protégées contre l'usure, sont pourvues d'une couche de protection contre la corrosion et l'usure supplémentaire (7) sous la forme d'une couche de nitrure, dans lequel la couche de protection contre la corrosion et l'usure (7) est produite en transformant l'alliage de base formant un nitrure par nitruration au plasma ou par nitrocarburation au plasma dans une atmosphère d'azote, respectivement d'azote-carbone, de telle sorte que les flancs de rainure durcis (5a,b) soient protégés en outre au moyen d'une couche de nitrure (7).

2. Piston selon la revendication 1, **caractérisé en ce que** la surface extérieure complète de la partie supérieure de piston (1) est pourvue de la couche de nitrure (7), alors que la surface intérieure de la partie supérieure de piston (1) reste sans revêtement.

3. Piston selon la revendication 1 ou 2, **caractérisé en ce que** la couche de nitrure (7) incluant la couche de bordure durcie (6) possède une épaisseur (profondeur de dureté de nitrure) de 0,2 mm à 1,0 mm sur les flancs de rainure durcis (5a,b), qui présente une couche de liaison appliquée par-dessus avec une épaisseur de 2 µm à 15 µm, et offre une dureté de surface supérieure à 550 HV (Vickers).

4. Piston selon la revendication 1, **caractérisé en ce que** avant l'application de la couche de nitrure (7) les flancs de rainure (5a,b) protégés contre l'usure sont durcis inductivement.
